# FASCICULE DE BREVET EUROPEEN

(11) **EP 3 927 601 B1**
(45) Date de publication et mention de la délivrance du brevet: **12.11.2025**
(21) Numéro de dépôt: 20710230.2
(22) Date de dépôt: 17.02.2020
(51) Int. Cl.: B62D 35/02, B62D 25/20, B62D 25/08, B60R 13/08

(54) **DISPOSITIF DE FIXATION D'UN ÉLÉMENT DE PROTECTION SOUS MOTEUR**
BEFESTIGUNGSEINRICHTUNG EINES SCHUTZKOMPONENTES UNTER MOTOR
FASTENING DEVICE FOR A PROTECTION ELEMENT UNDER THE ENGINE

(30) Priorité: 22.02.2019 FR 1901800
(43) Date de publication de la demande: 29.12.2021
(73) Titulaire: Stellantis Auto SAS, 78300 Poissy (FR)
(72) Inventeur: BERTH, Stephane, 92320 CHATILLON (FR)
(74) Mandataire: BCIP
(86) Numéro de dépôt international: PCT/FR2020/050282
(87) Numéro de publication internationale: WO 2020/169908

(56) Documents cités:
- EP-A1- 0 891 917
- EP-A1- 0 891 917
- CN-A- 104 443 073
- CN-A- 104 443 073
- DE-A1- 102014 220 703
- DE-A1- 19 521 632
- DE-A1- 19 521 632
- DE-U1- 9 302 419
- DE-U1- 9 302 419
- FR-A1- 3 038 290
- FR-A1- 3 038 290

## Description

La présente invention revendique la priorité de la demande française 1901800 déposée le 22 Février 2019.

L'invention concerne le domaine de l'assemblage de véhicule automobile. Plus particulièrement, l'invention concerne un dispositif de fixation d'une protection bas moteur. Cette protection bas moteur est habituellement formée d'une plaque ou d'un capot fixé d'une part au berceau du moteur et d'autre part à la face avant du véhicule notamment sur des appuis de façade.

L'assemblage de la protection bas moteur est réalisé par le dessous du véhicule avec peu de visibilité et/ou d'espace par évoluer.

Le document FR3038290 décrit la fixation d'un déflecteur sous la partie avant d'un véhicule. Le déflecteur est fixé sur une cloison solidaire d'une caisse et placée entre un système de refroidissement et un bouclier. Un déflecteur comprenant un corps positionné sous la cloison. Le déflecteur comprend en outre une griffe articulée par rapport au corps du déflecteur, cette griffe ou ergot étant apte à s'introduire au sein d'une ouverture pratiquée dans la cloison. Le document DE 93 02 419 U1 décrit une plaque de fond pour un véhicule automobile, fixée à un support transversal à l'aide de languettes et de fentes, ce qui permet un ajustement serré et un glissement relatif entre les composants.

Un but de la présente invention est de répondre aux inconvénients du document de l'art antérieur mentionné ci-dessus et en particulier, de proposer un dispositif de fixation d'un élément de protection sous moteur facilitant l'assemblage de la protection par un utilisateur.

Pour cela, un premier aspect de l'invention concerne un dispositif de fixation d'un élément de protection sous moteur sur un appui de façade avant d'un véhicule automobile le dispositif comprenant un support agencé pour être fixé sur une extrémité de l'appui de façade, caractérisé en ce que le support comprend une surface de glissement agencée pour glisser sur une surface de glissement correspondante de l'appui de façade lors du montage du support sur l'appui de façade , le dispositif de fixation comprend en outre une butée agencée pour limiter le mouvement du support sur l'appui de de façade. La surface de glissement de l'appui de façade comprend un rebord s'étendant sensiblement perpendiculairement à l'axe longitudinal de l'appui de façade de sorte que la surface de glissement de l'appui façade forme un profil en L, et la surface de glissement du support comprend un rebord s'étendant sensiblement perpendiculairement au plan longitudinal de la deuxième extrémité du support, de sorte que la surface de glissement du support forme un profil en L.

On comprend que les deux surfaces de glissement assurent le guidage du mouvement entre le support et l'appui de façade. Pour l'utilisateur cela signifie qu'il lui suffit simplement d'engager le support sur l'appui de face et ensuite de pousser sur le support qui sera guidé sur l'appui de façade par la surface de glissement. Par ailleurs, la butée assure le positionnement optimal du support sur l'appui de façade en fin de mouvement. Une fois en butée l'utilisateur est assuré de la bonne position du support pour sa fixation sur l'appui de façade.

Avantageusement, le dispositif de fixation des moyens de fixation du support sur l'appui de façade.

Avantageusement, la surface de glissement du support et la surface de glissement de l'appui de façade sont planes.

Avantageusement, la butée comprend une languette agencée pour venir en contact avec l'appui de façade pour stopper le glissement du support sur l'appui de façade dans une position déterminée de fixation du support.

Avantageusement, la butée comprend un ergot formé sur l'appui de façade et agencée pour venir en contact avec le support pour stopper le glissement du support sur l'appui de façade dans une position déterminée de fixation du support.

Un deuxième aspect de l'invention concerne un véhicule automobile comprenant un appui de façade avant, et un élément de protection de bas moteur caractérisé en ce que l'élément de protection de bas moteur est monté sur l'appui de façade avant par l'intermédiaire du dispositif de fixation selon le premier aspect.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[Fig.1] représente une vue en perspective de dessous de la structure avant d'un véhicule,
[Fig.2] représente une vue de détail du dispositif de fixation d'un élément de protection sous moteur selon l'invention,
[Fig.3] représente une vue de côté du dispositif de fixation d'un élément de protection sous moteur selon l'invention,
[Fig.4] représente une vue de détail du support du dispositif de fixation d'un élément de protection sous moteur selon l'invention.

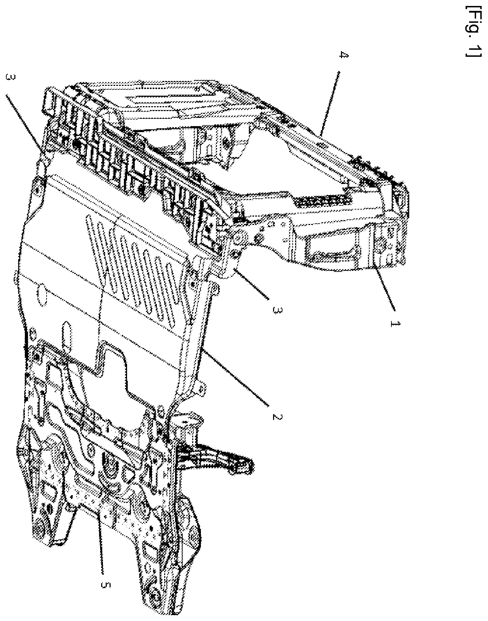

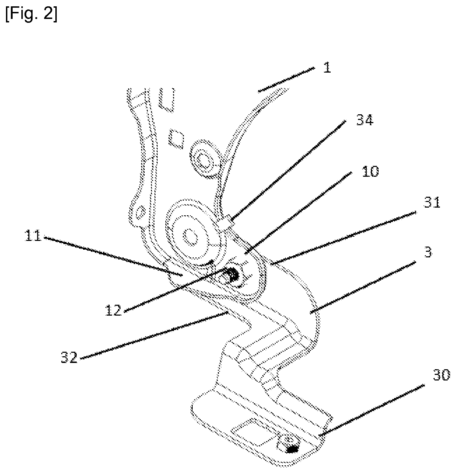

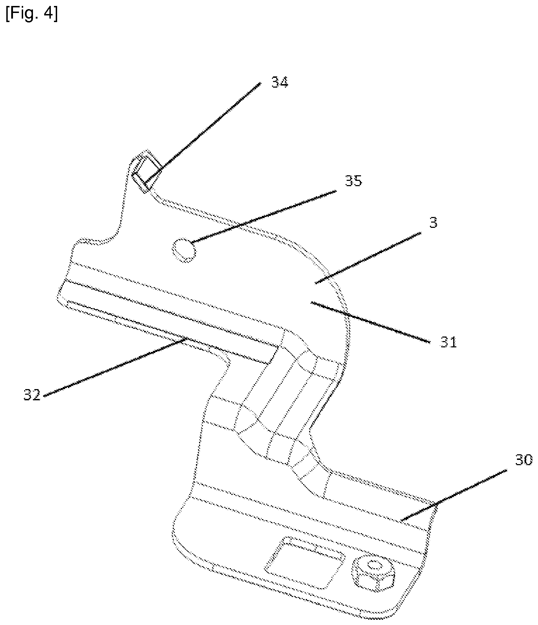

Le dispositif de fixation d'un élément de protection sous moteur selon l'invention va à présent être décrit en référence aux figures 1 à 4.

De façon connue en soit la structure avant d'un véhicule comprend une façade avant 4 agencée pour permettre l'assemblage par exemple d'un radiateur de refroidissement (non représenté) et/ou un déflecteur d'air (non représenté). La façade avant comprend des appuis de façade 1 monté de chaque côté de la façade avant 3. Les appuis de façade 1 ont une forme général allongée et plate. La structure avant du véhicule comprend également un berceau moteur 5 agencé pour recevoir et supporter au moins en partie le moteur du véhicule (non représenté). Le berceau moteur 5 n'est pas directement lié à la façade avant 4 ou aux appuis 1 de façade. Une partie du bas moteur située entre le berceau moteur 5 et la façade avant 4 peut donc être exposé à des chocs ou projections liées au mauvais état de la chaussée. Pour protéger cette zone du bas moteur, la structure avant du véhicule comprend un élément de protection 2 du bas moteur. Cet élément de protection 2 du bas moteur est par exemple un carter 2 ou une plaque de protection occultant ou couvrant l'espace entre la façade avant 4 et le berceau moteur 5.

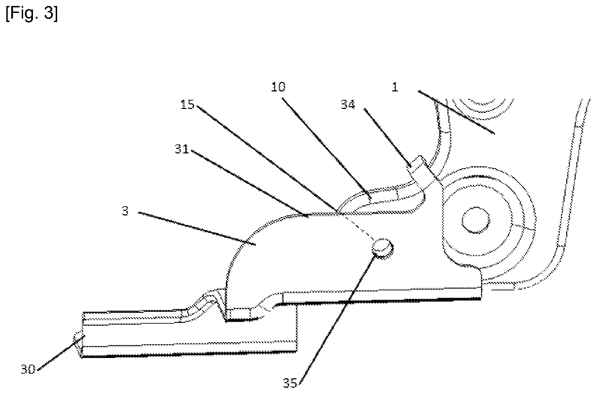

Le carter 2 monté d'une part sur le berceau moteur 5 et d'autre part sur les appuis de façade 1. Le montage du carter 2 sur l'appui de façade 1 est réalisé par l'intermédiaire de support 3. Le support 3 est par exemple une pièce métallique emboutie de forme allongée. Une première extrémité 30 du support est agencée pour être fixée sur le carter 2 de protection, une deuxième extrémité 31 du support est agencée pour être montée sur l'extrémité inférieure 10 de l'appui de façade 1. La fixation du support 3 sur l'appui de façade 1 est réalisée par un système vis/écrou. Pour ce faire, la deuxième extrémité 31 du support 3 comprend un orifice 35 pour le passage d'une vis 12. L'extrémité inférieure 10 de l'appui de façade 1 comprend également un orifice de passage 15 pour la vis et un écrou 12 par exemple soudé au niveau de l'orifice. Lors de l'assemble du support 3 sur l'appui de façade 1, l'extrémité inférieure 10 de l'appui de façade 1 et la deuxième extrémité 31 du support 3 sont mise en contact en plaçant les deux orifices 15, 35 en vis-à-vis (comme illustré sur la figure 3). La vis est ensuite vissée dans l'écrou 12 au travers de l'alignement des deux orifices 15, 35.

Pour faciliter l'opération de mise en place des supports 3 du carter 2 de protection sur les appuis de façade 1 sachant que l'opérateur travaille alors sous le véhicule placé sur balancelles et donc dans des conditions peu confortables, les appuis de façade 1 et les supports 3 comprennent respectivement des surfaces de glissement 11, 32. C'est surfaces de glissement 11, 32 ont pour vocation d'une part à faciliter la mise en place du support 3 sur l'appui de façade 1 et d'autre part à guider le déplacement sur support 3 sur l'appui de façade 1 jusqu'à l'alignement des deux orifices de passage de la vis.

La surface de glissement 11 de l'appui de façade 1 comprend un rebord s'étendant sensiblement perpendiculairement à l'axe longitudinal de l'appui de façade 1. Ainsi, le rebord 11 forme une surface plane sensiblement perpendiculaire au plan de l'extrémité inférieure 10 de l'appui de façade 1. Le rebord 11 de l'appui de façade 1 et l'extrémité inférieure 10 de l'appui de façade forme par exemple un profil en L.

La surface de glissement 32 du support 3 comprend un rebord 32 s'étendant sensiblement perpendiculairement au plan longitudinal de la deuxième extrémité 31 du support 3. Le rebord 32 du support 3 et la deuxième l'extrémité 31 du support 3 forme par exemple un profil en L.

Ainsi on comprend que lors du montage du support 3 sur l'appui de façade 1 le rebord 32 du support 3 glisse sur le rebord 11 de l'appui de façade 1 facilitant ainsi l'opération de montage.

Par ailleurs, afin de stopper le mouvement de glissement du support 3 sur l'appui de façade 1, au moment où l'orifice 35 de passage de la vis du support 3 coïncide avec l'orifice 15 de l'appui de façade 1, une butée 34 est créée soit sur le support 3 soit sur l'appui de façade 1. Selon la variante de réalisation représentée, la butée comprend une languette 34 formée à partir de la deuxième extrémité 31 du support 3. La languette 34 forme par exemple un crochet agencé pour venir en contact avec l'appui de façade 1 lorsque l'orifice de passage de la vis du support 3 coïncide avec l'orifice de l'appui de façade 1.

Par ailleurs, la languette 34 et le rebord 32 du support 3 forment deux moyens de guidage permettant de faciliter l'introduction du support 3 sur l'extrémité inférieure 10 de l'appui de façade 1.

On comprend que le dispositif de montage selon l'invention facilite la mise en place des supports pour le montage du carter de protection sous moteur par le monteur. En effet, les surfaces des rebords 32, 11 créées permettent un coulissement du support 3 sur l'appui de façade 1 et la languette 34 permette un arrêt du mouvement quand les orifices 15, 35 de fixations coïncident. L'opération pour le monteur est ainsi fortement facilitée car celui travaille sous le véhicule monté sur balancelle donc dans des conditions difficiles.

Par ailleurs, selon la variante de réalisation représenté, lorsque le support est monté en butée sur l'appui de façade 1, le rebord 11 du support 3 et la languette 34 se situe de part et d'autre d'un plan contenant l'axe de rotation de la vis. Cette disposition particulière permet de bloquer la rotation relative du support 3 par rapport à l'appui de façade 1 lors de l'opération de vissage.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.
Ainsi, la butée peut être formée sur l'appui de façade 1 par exemple par un ergot ou un bossage qui vient interagir avec la deuxième extrémité du support 3 pour bloque le mouvement de glissement.

## Revendications

1. Dispositif de fixation d'un élément de protection (2) sous moteur sur un appui de façade (1) avant d'un véhicule automobile, le dispositif comprenant un support (3) agencé pour être fixé sur une extrémité (10) de l'appui de façade (1), le support (3) comprenant une surface (32) de glissement agencée pour glisser sur une surface de glissement (11) correspondante de l'appui de façade (1) lors du montage du support (3) sur l'appui de façade (1), le dispositif de fixation comprenant en outre une butée (34) agencée pour limiter le mouvement du support (3) sur l'appui de de façade (1), **caractérisé en ce que** la surface de glissement (11) de l'appui de façade (1) comprend un rebord s'étendant sensiblement perpendiculairement à l'axe longitudinal de l'appui de façade de sorte que la surface de glissement de l'appui façade (11) forme un profil en L, et la surface de glissement (32) du support (3) comprend un rebord (32) s'étendant sensiblement perpendiculairement au plan longitudinal de la deuxième extrémité (31) du support (3), de sorte que la surface de glissement (32) du support (3) forme un profil en L.

2. Dispositif de fixation selon la revendication précédente **caractérisé en ce qu'**il comprend des moyens de fixation du support sur l'appui de façade (1).

3. Dispositif de fixation selon l'une des revendications précédentes **caractérisées en ce que** la surface de glissement (32) du support (3) et la surface de glissement (11) de l'appui de façade (1) sont planes.

4. Dispositif de fixation selon l'une des revendications précédentes caractérisé en que la butée comprend une languette (34) formée sur le support et agencée pour venir en contact avec l'appui de façade (1) pour stopper le glissement du support (3) sur l'appui de façade (1) dans une position déterminée de fixation du support (3).

5. Dispositif de fixation selon l'une des revendications précédentes caractérisé en que la butée comprend un ergot formé sur l'appui de façade et agencée pour venir en contact avec le support (3) pour stopper le glissement du support (3) sur l'appui de façade (1) dans une position déterminée de fixation du support (3).

6. Véhicule automobile comprenant un appui de façade avant, et un élément de protection de bas moteur **caractérisé en ce que** l'élément de protection de bas moteur est monté sur l'appui de façade avant par l'intermédiaire du dispositif de fixation selon l'une des revendications précédentes.

## Patentansprüche

1. Vorrichtung zur Befestigung eines Schutzelements (2) unter Motor an einer vorderen Frontauflage (1) eines Kraftfahrzeugs, wobei die Vorrichtung einen Träger (3) umfasst, der so angeordnet ist, dass er an einem Ende (10) der Frontauflage (1) befestigt werden kann, wobei der Träger (3) eine Gleitfläche (32) umfasst, die so angeordnet ist, dass sie auf einer entsprechenden Gleitfläche (11) der Frontauflage (1) gleitet, wenn der Träger (3) an der Frontauflage (1) angebracht wird, wobei die Befestigungsvorrichtung ferner einen Anschlag (34) umfasst, der so angeordnet ist, dass er begrenzt wird Bewegung des Trägers (3) auf der Fassadenauflage (1), **dadurch gekennzeichnet, dass** die Gleitfläche (11) der Fassadenauflage (1) einen sich im Wesentlichen senkrecht zur Längsachse der Fassadenauflage erstreckenden Flansch umfasst, sodass die Gleitfläche der Fassadenauflage (11) ein L-Profil bildet, und die Gleitfläche (32) des Trägers (3) einen sich im Wesentlichen senkrecht zur Längsebene des zweiten Endes (31) des Trägers (3) erstreckenden Flansch (32) umfasst, sodass die Gleitfläche (32) der Halterung (3) ein L-Profil bildet.

2. Befestigungsvorrichtung nach dem vorhergehenden Anspruch, **dadurch gekennzeichnet, dass** sie Mittel zur Befestigung des Trägers an der Fassadenauflage (1) umfasst.

3. Befestigungsvorrichtung nach einem der vorhergehenden Ansprüche, **dadurch gekennzeichnet, dass** die Gleitfläche (32) des Trägers (3) und die Gleitfläche (11) der Fassadenauflage (1) eben sind.

4. Befestigungsvorrichtung nach einem der vorhergehenden Ansprüche, **dadurch gekennzeichnet, dass** der Anschlag eine Zunge (34) umfasst, die an dem Träger ausgebildet ist und so angeordnet ist, dass sie mit der Fassadenauflage (1) in Eingriff kommt, um das Gleiten des Trägers (3) auf der Fassadenauflage (1) in einer bestimmten Befestigungsposition des Trägers (3) zu stoppen.

5. Befestigungsvorrichtung nach einem der vorhergehenden Ansprüche, **dadurch gekennzeichnet, dass** der Anschlag eine Nase umfasst, die an der Fassadenauflage ausgebildet ist und so angeordnet ist, dass sie mit dem Träger (3) in Eingriff kommt, um das Gleiten des Trägers (3) auf der Fassadenauflage (1) in einer bestimmten Befestigungsposition des Trägers (3) zu stoppen.

6. Kraftfahrzeug mit einer vorderen Fassadenauflage und einem unteren Motorschutzelement, **dadurch gekennzeichnet, dass** das untere Motorschutzelement über die Befestigungsvorrichtung nach einem der vorhergehenden Ansprüche an der vorderen Fassadenauflage angebracht ist.

## Claims

1. Device for fixing a protective element (2) under engine to a front facade support (1) of a motor vehicle, the device comprising a support (3) arranged to be fixed to one end (10) of the facade support (1), the support (3) comprising a sliding surface (32) arranged to slide on a corresponding sliding surface (11) of the facade support (1) upon assembly line of the support (3) on the facade support (1), the fixing device further comprising a stop (34) arranged to limit the movement of the support support (3) on the front support (1), wherein the sliding surface (11) of the front support (1) comprises a flange extending substantially perpendicularly to the longitudinal axis of the front support so that the sliding surface of the front support (11) forms an L-shaped profile, and the sliding surface (32) of the support (3) comprises a flange (32) extending substantially perpendicularly to the longitudinal drawing of the second end (31) of the support (3), so that the sliding surface (32) of the support (3) forms an L-shaped profile.

2. Fastening device according to the previous claim, **characterised in that** it comprises means for fastening the support to the facade support (1).

3. Fastening device according to one of the previous claims, **characterised in that** the sliding surface (32) of the support (3) and the sliding surface (11) of the facade support (1) are flat.

4. Fastening device according to one of the previous claims, **characterised in that** the stop comprises a tongue (34) formed on the support and arranged to come into contact with the front support (1) in order to stop the sliding of the support (3) on the front support (1) in a determined fastening position of the support (3).

5. Fastening device according to one of the previous claims, **characterised in that** the stop comprises a lug formed on the front support and arranged to come into contact with the support (3) in order to stop the sliding of the support (3) on the front support (1) in a determined fastening position of the support (3).

6. A motor vehicle comprising a front facade support, and a low-engine protective element, wherein the low-engine protective element is mounted on the front facade support by means of the fastening device according to one of the previous claims.
